# EUROPEAN PATENT APPLICATION

(11) **EP 2 339 464 A1**
(43) Date of publication of application: **29.06.2011**
(21) Application number: 09180456.7
(22) Date of filing: 22.12.2009
(51) Int. Cl.: G06F 9/46

(54) **A method of executing a program**

(71) Applicant: Net Transmit & Receive, S.L., 08019 Barcelona (ES)
(72) Inventor: Casanovas, David Llort, Barcelona (ES); Prieto, Joan Pons, Barcelona (ES)
(74) Representative: O'Connell, David Christopher

(57) **Abstract**

In a local computer, when running a program, it is determined when the program is making a call to an operating system of the local computer, expecting a response. The call to the operating system is intercepted, and, on intercepting the call to the operating system of the local computer, it is determining whether the call requires resources that are to be accessed from a remote computer. If the call requires resources that are not to be accessed from the remote computer, the call is passed to the operating system of the local computer; or, if the call requires resources that are to be accessed from the remote computer, it is sent to the remote computer over a wide area network. In the remote computer, the call is received the call from the local computer; the call is executing in an operating system of the remote computer; and the result is returned to the local computer. In the local computer, the expected response is received from the remote computer; and returned to the program.

## Description

### Field of the invention

The present invention relates to a method and system for executing a program, and in particular to a method of executing a program from one computer, while using resources available on another computer.

### Background of the invention

The normal way to obtain secure access to a corporate or home Local Area Network (LAN) from anywhere on the internet is to use a Virtual Private Network (VPN). In a VPN, data packets destined for a remote LAN are sent from the local computer through a secure tunnel to a machine on the remote LAN that verifies the initial connection and which passes the data packets on to other remote machines (or computers) on the remote LAN.

The problem with this mechanism is that the machine on the remote LAN would be behind a firewall and there must therefore be a suitable hole in the firewall to allow the machine to listen for incoming connections. In addition, a user connecting over a VPN would act as a node on the remote network and would therefore only be able to access information that has been shared, for example, local files on a particular personal computer (PC) that have been shared.

There is also a potential security hole since the remote network must trust completely the machine running the VPN which could be running any program. Since all programs have access through the VPN to all computers on the remote LAN, a virus could enter the remote LAN and infect any number of vulnerable computers.

An alternative approach is to use remote control software. In this approach, a web browser or other program is used to connect to a remote machine through a secure mechanism, the remote machine having run a suitable program to enable such connectivity. One problem with this approach is that the machine can not be used by a local user as the mouse and keyboard are under remote control. Another problem is the bandwidth needed and low latency required between the remote computer and the controlling computer when the screen of the remote computer alters rapidly. It is therefore impossible to play video or a computer game using this mechanism.

An example of remote control of computers can be found in US 7,007,070, which describes a program in which the display of the remote computer is visible in a window on the local machine, and the files of the local computer appear as networked devices to the remote machine.

There is a need for a system that provides a way in which to run a single program as if it were running in a remote computer but when it is in fact running locally.

### Summary of the invention

According to a first aspect of the present invention, there is provided a method of executing a program in a local computer, comprising:
before starting execution of the program:
   determining which resources are to be accessed by the program from a remote computer; and
   when running the program:
   determining when the program is making a call to an operating system of the local computer, expecting a response;
   intercepting the call to the operating system of the local computer;
   on intercepting the call to the operating system of the local computer, determining whether the call requires resources that are to be accessed from the remote computer; and
   passing the call to the operating system of the local computer if the call requires resources that are not to be accessed from the remote computer; or
   if the call requires resources that are to be accessed from the remote computer:
      sending the call to the remote computer over a wide area network;
      receiving the expected response from the remote computer; and returning the expected response to the program.

According to a second aspect of the present invention, there is provided a method of executing a program, wherein a local computer, before starting execution of the program:
determines which resources are to be accessed by the program from a remote computer; and
when running the program:
   determines when the program is making a call to an operating system of the local computer, expecting a response;
   intercepts the call to the operating system of the local computer;
   on intercepting the call to the operating system of the local computer, determines whether the call requires resources that are to be accessed from the remote computer; and
   passes the call to the operating system of the local computer if the call requires resources that are not to be accessed from the remote computer; or
   if the call requires resources that are to be accessed from the remote computer:
   sends the call to the remote computer over a wide area network;
   the method comprising, in the remote computer:
      receiving the call from the local computer;
      executing the call in an operating system of the remote computer; and
      returning a result of the call to the local computer;
   such that the local computer is able to receive the expected response from the remote computer; and
   return the expected response to the program.

According to other aspects of the invention, there are provided computers configured to operate in accordance with these methods, and computer program products, comprising code for executing the methods.

### Brief description of the drawings

For a better understanding of the invention, and to show more clearly how it may be carried into effect, reference will now be made, by way of example only, to the accompanying drawings in which:
Figure 1 shows a system for executing a program in accordance with the invention; and
Figure 2 shows in more detail the structure of software running on the computers in the system of Figure 1.
Figure 3 is a first flow chart, showing method steps for executing a program in accordance with the invention.
Figure 4 is a second flow chart, showing method steps for executing a program in accordance with the invention.
Figure 5 is a third flow chart, showing method steps for executing a program in accordance with the invention.
Figure 6 is a fourth flow chart, showing method steps for executing a program in accordance with the invention.

### Detailed description

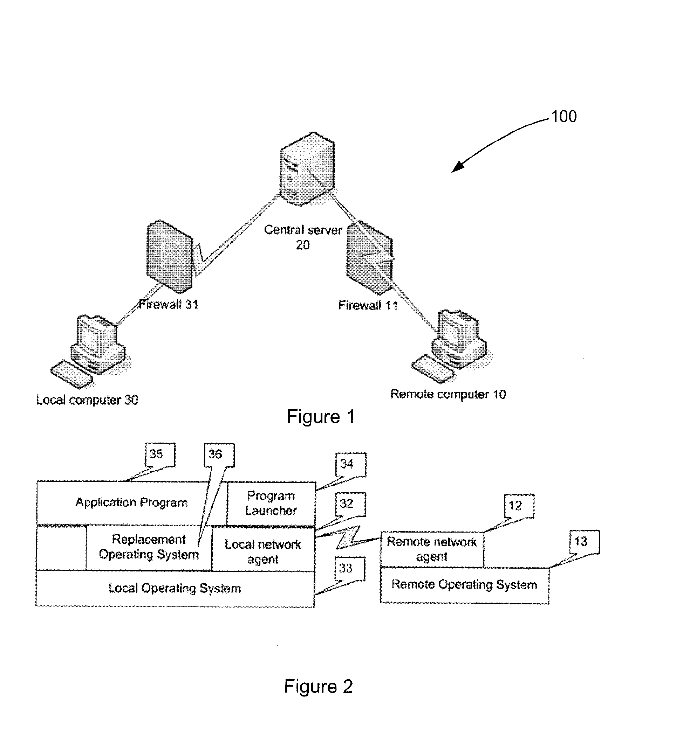

With reference to Figure 1, the system 100 comprises a first computer 10 behind a corporate firewall 11. The first computer 10 is also referred to herein as a remote computer, as it is remote from the user who is using the system. As illustrated in Figure 1, the remote computer 10 is connected to a central server 20 via the corporate firewall 11. In other embodiments, the server 20 may be part of a corporate system behind the firewall 11. In still other embodiments, the firewall 11 may be installed on the computer 10.

The system 100 further comprises a second computer 30 behind a firewall 31. The second computer 30 is also referred to herein as a local computer, as it is local to the user who is using the system. The local computer 30 is connected to the central sever 20 via the firewall 31. The firewall 31 may be installed on the local computer 30, or it may be provided on a separate computer. The local computer 30 may be a standalone device, or it may form part of a Local Area Network (LAN).

In a typical implementation, the local computer 30 is connected to the central server 20 over the internet, but the nature of this connection is not important for an understanding of the invention. The remote computer 10 may also be connected to the central server 20 over the internet or, as mentioned above, the remote computer 10 and the server 20 may form part of a corporate system, for example connected by means of a Local Area Network (LAN). Again, the nature of this connection is not important for an understanding of the invention.

As shown in Figure 2, the remote computer 10 runs a remote network agent 12, the function of which will be described in more detail below, but that is capable of making calls to an operating system 13 of the remote computer 10.

The local computer 30 runs a local network agent 32 that is capable of communication with the remote agent 12 of the remote computer 10, either directly over the relevant network connection, or through the central server 20. The function of the local network agent 32 will be described in more detail below. The local computer 30 also comprises an operating system 33, referred to herein as the local operating system. The local computer 30 is also running program launcher software 34, which may be installed on the computer 30 at its first use, or may be downloaded to the computer 30 from a website that provides this service, or may be accessed by means of a temporary storage device. Figure 2 also shows an application program 35. It will be appreciated that many such application programs will be stored and available to run on a typical computer. The local computer 30 also stores additional software 36 for performing many of the functions described below, this additional software being described as a replacement operating system.

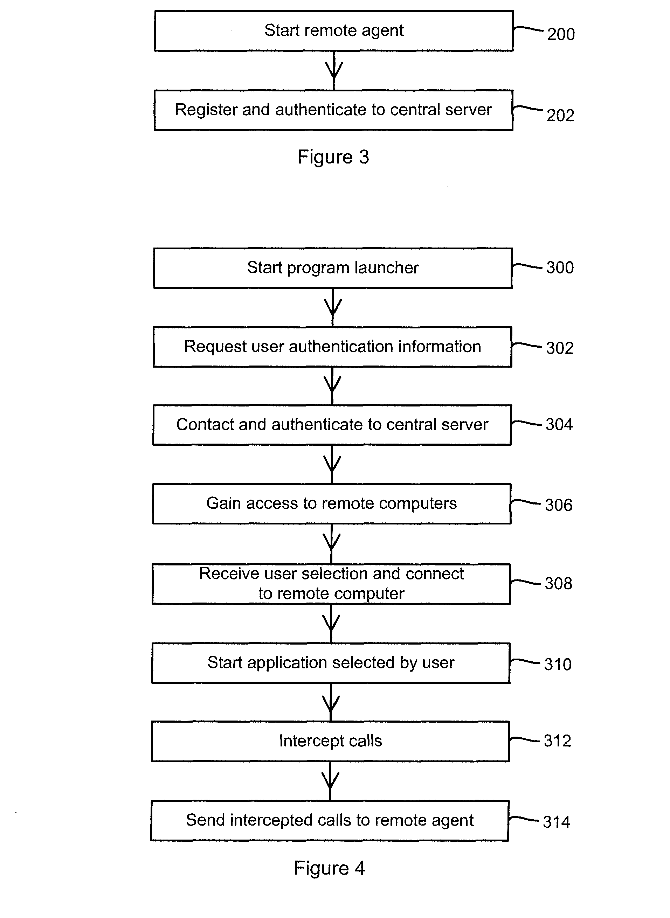

In order for methods in accordance with the invention to be used, the remote computer 10 must be suitably configured. This initial configuration of the remote computer 10 of the system 100 is illustrated by means of a flow chart in Figure 3. When the remote agent 12 is started (step 200), the remote agent 12 registers and authenticates to the central server 20 (step 202), the central server being accessible through the internet, or over a LAN, or otherwise, as described above. The remote agent 12 repeats this registration every few minutes in order to keep the Transmission Control Protocol/Internet Protocol (TCP/IP) connection between the remote agent 12 and the central server 20 alive. This is necessary for the central server 20 to initiate communication to the remote agent 12, which would otherwise be inaccessible behind the firewall 11.

The initial operation of the local computer 30 of the system 100 is illustrated by means of a flow chart in Figure 3. When the user of the local computer 30 wishes to use resources that are located on the remote computer 10, he starts the program launcher 34 of the local computer 30 is started (step 300). The program launcher 34 typically requests authentication information such as a username and password from the user (step 302). In step 304 of the procedure, the program launcher 34 then contacts the central server 20 via the firewall 31, and authenticates itself.

In an alternative embodiment, once the program launcher 34 has identified the remote computer 10, a dedicated communication channel is established between local network agent 32 and remote network agent 12.

In another embodiment, the program launcher 34 is preconfigured with the username, authentication details and identity of the remote computer 10, and so it is not necessary for the user to provide authentication information.

In step 306, the program launcher 34 is given access to one or more remote agents running on remote computers that have been suitably configured as described above.

In step 308, the program launcher 34 causes a list of available application programs to be presented to the user. For example, the list of available application programs may contain all of the application programs that are installed on the local computer 30. Such application programs are well known, and will not be described further herein, although the use of the present invention will be described with reference to examples, in which the application programs include a word processing program and a web browser.

When the user selects one of the listed application programs, the program launcher 34 then presents him with a list of one or more remote computers, being the remote computers that have been suitably configured as described above.

When the user selects one of these listed remote computers, the program launcher 34 then presents him with further options. Specifically, the program launcher presents the user with a list of available resources on the remote machine, and asks the user to select which of these available resources he wishes to access. As examples, the program launcher may present the user with a list of available resources that includes the C: drive on the remote machine, an external memory connected to the remote machine, other network drives accessible from the remote machine over the LAN to which it is connected, and a Network Interface Card (NIC) connected to the remote machine. The use of the invention will now be described in more detail with reference to the selections that the user might make in respect of these available resources. From this description, the use of the invention in connection with other possible resources will be apparent.

When the user selects one of the remote computers on the list presented to him, such as the remote computer 10, the program launcher 34 causes the local network agent 32 to be connected to the remote agent 12 on that remote computer 10 via the central server 20.

Once communication is established, in step 310, the program launcher 34 starts the application program 35 selected by the user from the list presented to him by the program launcher 34 on the local computer 30. This program is set to run within a replacement operating system environment 36 located on the local computer 30. When the program is running, in step 312 the replacement operating system environment 36 intercepts certain calls or Application Program Interfaces (APIs) to the local operating system 33, as described in more detail below.

Thus, if it is determined that the calls require access to resources which the user has requested be obtained from the remote computer 10, the intercepted calls and the associated data are passed to the local network agent 32, which encapsulates them and, in step 314, sends them via the internet to the remote network agent 12 running on the designated remote computer 10. Each such call expects a response of some type. For example, a request for a file will expect that the file will be returned, while a request to save a file will expect an acknowledgement that the save operation was successful.

The operation of the remote computer 10 after receiving the intercepted calls from the local computer 30 of the system 100 is illustrated by means of a flow chart in Figure 4. After receiving the intercepted calls from the local computer 30 (step 400), the remote computer 10 makes equivalent calls to the remote operating system 13 of the remote computer 10 (step 402). The results of the calls are sent back the same way to the local network agent 32 (step 404).

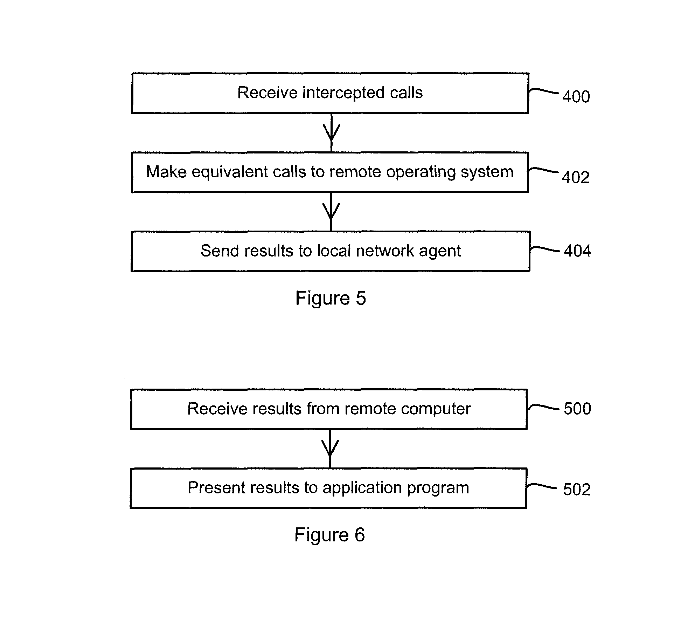

The operation of the local computer 30 after receiving the results of the calls from the remote computer 10 of the system 100 is illustrated by means of a flow chart in Figure 5. When the results of the calls are received from the remote computer 10 (step 500), the results are presented to the application program 35 by the replacement operating system 36 (step 502). The application program 35 has therefore no knowledge that any communication has taken place.

Thus the local application program 35 appears in some respects to be running as if it were within the remote computer 10, because it is, in fact, using at least some resources from the remote computer 10.

As an illustration of the use of the present invention, this will now be described with reference to a situation where the user selects the remote computer 10 in respect of resources on the C: drive. Thus, whenever the relevant application program 35 makes an operating system call that would normally involve the use of resources on the C: drive of the local computer 30, the replacement operating system 36 intercepts the operating system call, and diverts it by means of the local network agent 32 and the remote network agent 12 and through the remote operating system 13 to the C: drive on the remote computer 10. The C: drive on the local computer 30 is inaccessible to application program 35.

Thus, for example, when the application program 35 is a web browser program, files that are downloaded from the internet are conventionally stored on the C: drive of the computer that is running the web browser. In this case, however, when the web browser program 35 attempts to store such downloaded files, they are stored as temporary files on the remote computer 10. Similarly, when the application program 35 is a word processing program, such programs conventionally save current versions of an open file as a background process, with these files being stored on the C: drive of the computer that is running the word processing program. In this case, however, when the word processing program attempts to store such files, they are stored on the remote computer 10.

As a result, in this example, the user is able to make use of the local computer 30, without leaving any files in the C: drive of the local computer.

Similarly, the user is able to retrieve files, for example programs installed on the remote machine, or data stored in the C: drive of the remote machine, for example when playing a game on that remote machine. Thus, a computer game can be run locally using the saved state and characters from the remote computer without needing to know where and how such state is stored.

As a further illustration of the use of the present invention, this will now be described with reference to a situation where the user selects the remote computer 10 in respect of resources in one or more specific directories of the file structure available on the remote machine, including locally attached disks and available networked disks. These resources are made visible to the application program as extra disk(s) on the local machine. If the user has not selected the C: drive of the remote machine, then the application program can use both the locally connected C: drive and remote resources as required. Thus, whenever the relevant application program 35 makes an operating system call that would normally involve the use of resources on the local computer 30, the replacement operating system 36 intercepts the operating system call, and determines whether it relates to a local disk or a remote disk. If it refers to a local disk then the local operating system is called; if remote then it diverts it by means of the local network agent 32 and the remote network agent 12 and through the remote operating system 13 to the relevant resource on the remote computer 10.

Thus, for example, when the application program 35 is a word processing program, and the user wishes to save a file to a specific directory location, it is in fact stored on the remote computer 10. Similarly, the user is able to retrieve files that are stored on the remote computer 10, edit those files while working on the local computer 30, and then save the amended version of the file back to the remote computer 10. Any temporary files required by the word processing program are stored on the local disk as normal.

This opens up various possibilities for remote working, for example, as a computer can be used to edit remote files without needing to share the remote directory and access it via a VPN.

As a further illustration of the use of the present invention, this will now be described with reference to a situation where the user selects the remote computer 10 in respect of the Network Interface Card (NIC). Whenever the relevant application program 35 makes an operating system call that would normally involve the use of the NIC, the replacement operating system 36 intercepts the operating system call, and diverts it by means of the local network agent 32 and the remote network agent 12 and through the remote operating system 13 to the NIC on the remote computer 10.

Thus, for example, when the application program 35 is a web browser, and the user wishes to retrieve data from a specific website, the web browser program 35 makes an operating system call that would normally be passed by the local operating system 33 to the NIC on the local computer 30, and would then be directed over the internet as required. In this case, however, the replacement operating system 36 intercepts the operating system call, and diverts it by means of the local network agent 32 and the remote network agent 12 and through the remote operating system 13 to the NIC on the remote computer 10. The NIC on the remote computer 10 then establishes the required connection with the website, in order to be able to retrieve the data from it.

This allows the user to carry out web browsing from the local computer 10, while appearing to be on the remote computer 10.

Therefore, a web browser on a public internet café can act as if it were running on a designated remote computer and be allowed access to internal web servers on the same LAN. Furthermore, these cases can be used together so that, for example, a mail client can run physically on one computer and yet have access to new mail from a corporate mail server over TCP/IP as well as access to the mail archives stored on disk on the remote computer.

Thus, the software on the local computer 30 causes it to act such that certain calls to the operating system 33, or certain Application Programming Interfaces (APIs), are intercepted and handled on the remote computer 10. Other APIs, especially those connecting to the various aspects of the overall user interface, such as outputs to the local display, and inputs from the local keyboard and mouse, are not intercepted and are handled by the local computer 30.

It is noted that more than one remote computer 10 can be connected and that multiple local programs can be started by the program launcher 34. For example, a browser can be running within the environment of one remote computer 10 while a word processor can be running within the environment of another remote computer. Thus it would be possible to open a web page in a browser as if it were in the corporate LAN, access an internal web page, and copy some data into the clipboard of the local machine. At the same time a word processor could be running within the environment of the user's home computer, and it would then be possible to paste the data into the word processor and save the file on the home computer.

In another embodiment, the program launcher 34 may offer the user the option of selecting an application program 35 that creates a virtual computer. That is, the program emulates a complete computer, which uses the local keyboard, mouse, graphic interface, printer and display, with the virtual display being a window on the local machine, while the virtual computer uses the local central processing unit (CPU). A part of such a program might in effect be a separate operating system, such that, when that separate operating system requires access to any data or files, the relevant calls are intercepted and passed across to the remote computer 10, such that the data and files are loaded from that remote computer. Similarly, the virtual computer loads any programs from the remote computer 10. The virtual hard disk device and virtual network interface card (NIC) would be mapped over the internet to the hard disk and NIC of a remote computer. Thus the local virtual machine would boot from the operating system on the remote machine, use files from the remote machine and transfer packets from the NIC of the remote machine, such that the environment appears to be that of the remote computer 10.

Although embodiments of the present invention have been illustrated in the accompanying drawings and described in the foregoing detailed description, it will be understood that the invention is not limited to the embodiments disclosed, but is capable of numerous modifications without departing from the scope of the invention as set out in the following claims.

## Claims

1. A method of executing a program in a local computer, comprising:
before starting execution of the program:
determining which resources are to be accessed by the program from a remote computer; and
when running the program:
determining when the program is making a call to an operating system of the local computer, expecting a response;
intercepting the call to the operating system of the local computer;
on intercepting the call to the operating system of the local computer, determining whether the call requires resources that are to be accessed from the remote computer; and
passing the call to the operating system of the local computer if the call requires resources that are not to be accessed from the remote computer; or
if the call requires resources that are to be accessed from the remote computer:
sending the call to the remote computer over a wide area network;
receiving the expected response from the remote computer; and
returning the expected response to the program.

2. A method as claimed in claim 1, comprising:
before starting execution of the program:
presenting a user with available programs for selection; and
executing the program in accordance with the method as claimed in claim 1 only for the or each selected program.

3. A method as claimed in claim 1 or 2, further comprising, before starting execution of the program:
presenting the user with an option to select one or more remote computer to which calls may be sent; and
if the intercepted call requires resources that are to be accessed from the remote computer, sending the call to the selected remote computer.

4. A method as claimed in claim 3, further comprising performing an authorization procedure on the one or more remote computer before presenting the user with the option to select said one or more remote computer.

5. A method as claimed in any preceding claim, wherein the step of determining which resources are to be accessed from the remote computer comprises:
before starting execution of the program:
presenting the user with available resources, and determining which resources are to be accessed from the remote computer based on a user selection.

6. A method as claimed in claim 5, wherein the available resources comprise one or more of:
a Network Interface card;
storage in the remote machine;
an external storage device connected to the remote machine;
a storage device available to the remote machine over a local area network to which the remote machine is connected.

7. A method as claimed in any preceding claim, wherein the resources that are to be accessed from the remote computer exclude resources associated with a user interface of the local computer.

8. A method as claimed in any preceding claim, further comprising executing a second program in accordance with the method.

9. A method as claimed in claim 8, wherein a second remote computer accessed by the second program differs from the remote computer accessed by the first program.

10. A method as claimed in claim 8 or 9, wherein, in executing the second program, the step of determining whether the call requires resources that are to be accessed from the remote computer considers second resources wherein the second resources differ from the resources considered when executing the first program.;

11. A computer, configured to perform the method as claimed in one of claims 1 to 10.

12. A method of executing a program, wherein a local computer, before starting execution of the program:
determines which resources are to be accessed by the program from a remote computer; and
when running the program:
determines when the program is making a call to an operating system of the local computer, expecting a response;
intercepts the call to the operating system of the local computer;
on intercepting the call to the operating system of the local computer, determines whether the call requires resources that are to be accessed from the remote computer; and
passes the call to the operating system of the local computer if the call requires resources that are not to be accessed from the remote computer; or
if the call requires resources that are to be accessed from the remote computer:
sends the call to the remote computer over a wide area network;
the method comprising, in the remote computer:
receiving the call from the local computer;
executing the call in an operating system of the remote computer; and
returning a result of the call to the local computer;
such that the local computer is able to receive the expected response from the remote computer; and
return the expected response to the program.

13. A method as claimed in claim 12, further comprising:
in the remote computer:
registering and authenticating to a server computer, through which the call is received from the local computer.

14. A computer program product, comprising code for causing a computer to perform the method as claimed in any of claims 1 to 10.

15. A computer program product, comprising code for causing a computer to perform the method as claimed in any of claims 12 to 13.
